Europäisches Patentamt

European Patent Office

Office européen des brevets

(11) Veröffentlichungsnummer: **0 268 254 B1**

(19)

(12) **EUROPÄISCHE PATENTSCHRIFT**

(45) Veröffentlichungstag der Patentschrift: **11.11.92**

(51) Int. Cl.⁵: **C03B** 37/14, G02B 6/38

(21) Anmeldenummer: **87116910.8**

(22) Anmeldetag: **17.11.87**

(54) **Verfahren und Vorrichtung zum lösbaren Befestigen von blanken Glasfasern in einer Spleissvorrichtung.**

(30) Priorität: **18.11.86 DE 3639458**

(43) Veröffentlichungstag der Anmeldung:
**25.05.88 Patentblatt 88/21**

(45) Bekanntmachung des Hinweises auf die Patenterteilung:
**11.11.92 Patentblatt 92/46**

(84) Benannte Vertragsstaaten:
**AT BE CH DE ES FR GB IT LI NL SE**

(56) Entgegenhaltungen:
**EP-A- 0 221 550**
**WO-A-84/02582**
**DE-A- 2 721 347**
**DE-A- 3 138 296**
**FR-A- 2 406 211**

**APPLIED OPTICS, Band 18, Nr. 19, Oktober 1979, Seiten 3256-3260, New York, US; K. Kinoshita et al.: "End preparation and fusion splicing of an optical fiber array with a CO2 laser"**

(73) Patentinhaber: **Alcatel SEL Aktiengesellschaft**
**Lorenzstrasse 10**
**W-7000 Stuttgart 40(DE)**

(84) Benannte Vertragsstaaten:
**DE**

(73) Patentinhaber: **Alcatel N.V.**
**Strawinskylaan 537 (World Trade Center)**
**NL-1077 XX Amsterdam(NL)**

(84) Benannte Vertragsstaaten:
**BE CH ES FR GB IT LI NL SE AT**

(72) Erfinder: **Rossberg, Rolf**
**Thüringer Strasse 17**
**W-7141 Schwieberdingen(DE)**

(74) Vertreter: **Gähr, Hans-Dieter, Dipl.-Ing. (FH) et al**
**Alcatel SEL AG Patent- und Lizenzwesen**
**Postfach 30 09 29**
**W-7000 Stuttgart 30(DE)**

## Beschreibung

Die Erfindung betrifft ein Verfahren zum lösbaren Befestigen von blanken Glasfasern der im Oberbegriff des Patentanspruchs 1 näher bezeichneten Art und eine Vorrichtung zur Durchführung des Verfahrens.

Aus der DE-OS 33 38 493 ist ein Verfahren und eine Vorrichtung zum Spleißen von Glasfaser-Bündeladern bekannt. Bei dem Verfahren werden die zum Spleißen bereits vorpräparierten Glasfasern der Enden von zwei Bündeladern jeweils so in parallele V-Nuten von zwei axial und lateral verschiebbaren Faserhalteplatten eingelegt und fixiert, daß sich die Faserenden überlappen, wobei in jeder Faserhalteplatte alternierend eine Glasfaser der einen Bündeladern und eine Glasfaser der anderen Bündeladern nebeneinander liegen. Das lösbare Fixieren der Glasfasern in der Spleißvorrichtung geschieht mittels aufgesetzter Niederhalter, welche die Glasfasern in die Nuten der Faserhalteplatten eindrücken. Die fertigungsbedingt vorhandenen geringen Schwankungen des Durchmessers der Glasfasern werden durch die Ausbildung des Niederhalters als elastisches Kissen ausgeglichen. Jedoch ist die bei dieser Fixierung der Glasfasern erzeugte Haftung zwischen dem angedrückten Kissen und den Nuten häufig nicht groß genug, um die Glasfasern in der Spleißvorrichtung mit Sicherheit vor axialen Verschiebungen zu bewahren. Dies ist jedoch erforderlich, weil vor dem Verschweißen der Faserenden diese stirnseitig mit exakten 90° Brüchen versehen sein müssen. Letztere werden mit einem Ritzwerkzeug hergestellt, das innerhalb der Spleißvorrichtung quer zur Achsrichtung über die Glasfasern verschoben wird. Ein nach dem Anritzen auf die Glasfasern ausgeübter Zug bewirkt die glatten 90° Brüche.

Ein Verfahren zur lösbaren Befestigung von Glasfasern in einer Spleißvorrichtung nach Anspruch 1 und eine Vorrichtung zur Durchführung des Verfahrens gemäß Anspruch 3 sind aus der Druckschrift "APPLIED OPTICS vom 01.10.1979, Band 18, Nr. 19, Seiten 3256 bis 3260" bekannt. Bei der hier beschriebenen Spleißvorrichtung werden die Glasfasern zur Befestigung in Nuten von üblicherweise aus Metall gefertigten Faserhalteplatten eingelegt und darin mittels schwenkbar gelagerter Hebel festgeklemmt. Um die Glasfasern einerseits nicht zu beschädigen, andererseits aber auch geringe Abweichungen vom Solldurchmesser der Glasfasern ausgleichen zu können, bestehen die Andruckplatten der Schwenkhebel aus Kunststoff, wodurch die Glasfasern in Abhängigkeit vom Durchmesser mit mehr oder weniger starkem Anpreßdruck in den eine glatte Oberfläche aufweisenden Nuten befestigt sind. Daher kann es vorkommen, daß sich beim Einwirken der zum Trennen der angeritzten Glasfasern notwendigen axialen Zugspannung einige verschieben und die Stirnflächen nicht ausnahmslos in einer Ebene liegen, wie es für Mehrfachspleißungen erforderlich ist.

Der Erfindung liegt die Aufgabe zugrunde, ein Verfahren zum lösbaren Befestigen von blanken Glasfasern in einer Spleißvorrichtung anzugeben, bei dem nach der Befestigung praktisch keine Axialverschiebung der Glasfasern mehr möglich ist und hierfür eine geeignete Vorrichtung zu schaffen. Diese Aufgabe wird erfindungsgemäß durch die in den kennzeichnenden Teilen der Patentansprüche 1 und 3 angegebenen verfahrenstechnischen und konstruktiven Maßnahmen gelöst. Vorteilhafte Merkmale der Erfindung sind den Unteransprüchen zu entnehmen.

Die Erfindung wird anhand eines in einer Zeichnung dargestellten Ausführungsbeispieles der Vorrichtung zur Durchführung des Verfahrens wie folgt näher beschrieben. In der Zeichnung zeigen:

Fig. 1 eine Spleißvorrichtung mit integrierter Vorrichtung zum lösbaren Befestigen von blanken Glasfasern, in perspektivischer Ansicht;

Fig. 2 zwei Faserhalteplatten mit zum Einsetzen in die Spleißvorrichtung vorbereiteten Glasfasern, in der Draufsicht.

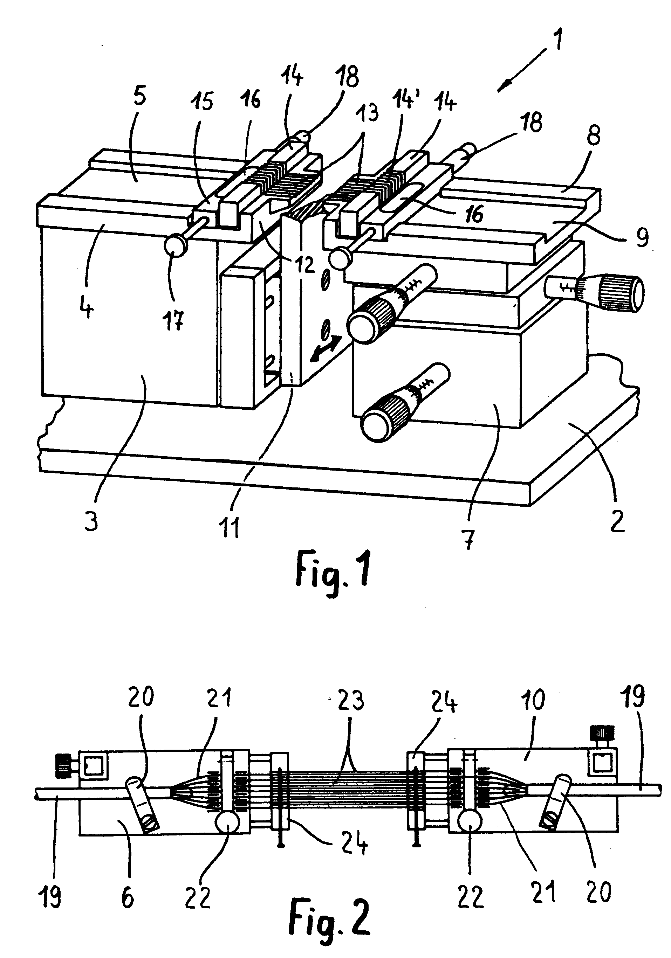

In Fig. 1 ist die Spleißvorrichtung insgesamt mit 1 bezeichnet. Sie besteht im wesentlichen aus einer Grundplatte 2, einem darauf befestigten Sockel 3 und einer vom Sockel getragenen Führungsschiene 4, die eine Aufnahme 5 für eine Faserhalteplatte 6 (Fig. 2) aufweist. Außerdem ist mit Abstand zum Sockel 3 auf der Grundplatte 2 ein in drei Koordinatenrichtungen verstellbarer Mikromanipulator 7 angeordnet, welcher ebenfalls eine Führungsschiene 8 mit Aufnahme 9 für eine weitere Faserhalteplatte 10 trägt. Zwischen dem Sockel 3 und dem Mikromanipulator 7 ist schließlich noch ein quer zur Längsrichtung der beiden Aufnahmen 5, 9 bewegbarer Schieber 11 vorgesehen, auf dem eine Ritzvorrichtung für das Herstellen von 90° Brüchen bei den Glasfasern und eine Schweißvorrichtung zum Verschmelzen der Faserenden angeordnet sind (nicht dargestellt).

Am Vorderende 12 der Führungsschienen 4, 8 schließen die Aufnahmen 5, 9 für die Faserhalteplatten 6, 10 jeweils mit einem Anschlag ab, dessen Oberseite ein eingelassenes Nutenfeld 13 zum Einlegen von Glasfasern aufweist. Unmittelbar daran anschließend ist in einer Ausnehmung jeder Führungsschiene 4, 8 eine Vorrichtung zum lösbaren Befestigen der Glasfasern angeordnet. Diese Vorrichtung besteht aus einer geschlitzten Führungsleiste 14, deren Schlitze 14' auf das Nutenfeld 13 ausgerichtet sind und einem hinter den Schlitzen 14' angeordneten Lötbad 15, dessen Rand wenigstens im Bereich der das Lot 16 enthaltenden Mulde in einer Ebene zum Nutenfeld 13 liegt. In die Mulde ist bei verflüssigtem Lot 16 ein Schieber 17 einführbar, wobei der Lotspiegel angehoben wird. Das Absenken des Lotspiegels geschieht durch Herausziehen des Schiebers 17 aus der Mulde. Bei dem dargestellten Ausführungsbeispiel ist der Schieber 17 ein einfacher Stift, der am außen befindlichen Ende ein Griffstück aufweist.

Das Lötbad 15 besteht aus einem blockförmigen Körper; wegen guter Wärmeleitfähigkeit zweckmäßigerweise aus einem Kupferblock, der an einem Ende beispielsweise einen Zapfen 18 zum Aufstecken eines Lötkolbens aufweist, bei dem die Lötspitze fehlt. Natürlich kann das Lötbad 15 auch mittels eines Heizelementes, wie z.B. einem Heizdraht, einer Heizpatrone o.ä., erwärmt werden. Das Heizelement ist dann in oder unter dem Körper des Lötbades 15 angeordnet. Eine weitere Möglichkeit der Loterwärmung besteht darin, den blockförmigen Körper des Lötbades 15 als Isolator auszubilden und das Lot 16 durch direkten Stromdurchgang zu erwärmen. Gegenüber der Aufnahme 5, 9 und der Führungsleiste 14 ist das Lötbad durch Glasplättchen oder andere geeignete Mittel thermisch isoliert.

In Fig. 2 sind die Enden von zwei Glasfaser-Bündeladern 19 durch Klemmfedern 20 an je einer Faserhalteplatte 6, 10 befestigt. Außerdem sind die auf einer Teillänge von der äußeren Bündelhülle befreiten und aufgefächerten, einzelnen Adern 21 des Bündels mittels eines Schwenkhebels 22 daran fixiert sowie mit den vom Primärcoating befreiten, blanken Glasfasern 23 in einer Feinführung 24 am vorderen Ende der Faserhalteplatten 6, 10 nochmals gehalten, und zwar liegt hier neben der Glasfaser 23 des einen Bündels jeweils das Ende einer Glasfaser des anderen Bündels. Der Abstand zwischen den Feinführungen 24 beider Faserhalteplatten ist dabei so bemessen, daß die beispielsweise über einen Bügel starr miteinander verbindbaren Faserhalteplatten 6, 10 hinter den Lötbädern 15 in die Aufnahmen 5, 9 der Spleißvorrichtung 1 eingesetzt werden können.

Beim Einsetzen der Faserhalteplatten 6, 10 in die Aufnahmen 5, 9 der Spleißvorrichtung 1 werden zugleich die aus den Feinführungen 24 hervorstehenden Glasfasern 23 in die Schlitze 14′ der Führungsleisten 14 eingelegt. Die Glasfasern 23 kommen dabei in den einzelnen Nuten der Nutenfelder 13 und zugleich auch plan auf den Rändern der Lötbäder 15 zu liegen. In den vorzugsweise aus Stahl bestehenden Nutenfeldern 13 können die Glasfasern 23 durch Auflegen magnetischer Gummikissen gegen ein nach dem Trennen der Fasern mögliches Herausfallen gesichert werden. Um die blanken Glasfasern 23, die in Monomodeausführrung nur einen Durchmesser von 0,125 mm haben, gegen axiale Zugeinwirkung sicher zu befestigen, wird das Lot 16 jedes Lötbades 15 bis zur Verflüssigung erwärmt, in der Mitte des Lötbades ein schmaler Niederhalter quer über die Glasfasern 23 gelegt und der Lotspiegel durch Eindrücken des Schiebers 17 in die Mulde bis über die Glasfasern angehoben. Der z.B. als Drahtbügel ausgebildete Niederhalter sorgt hierbei dafür, daß die Glasfasern 23 nicht auf dem flüssigen Lot 16 schwimmen und daß das Lot zwischen den eng benachbarten Glasfasern, die einen sehr kleinen lichten Abstand von ca. 0,25 bis 0,3 mm zueinander haben, hindurchtreten und diese einzeln umschließen kann. Die Schlitze 14′ der Führungsleiste 14 und Nuten der Feinführung 24 verhindern, daß sich die Glasfasern 23 im flüssigen Lot 16 aneinanderlegen. Wird nun z.B. durch Abnehmen des Lötkolbens oder anderer Maßnahmen das Lot 16 bis zum Erstarren abgekühlt, so sind die Glasfasern 23, ohne sie vorher metallisieren zu müssen, fest und dicht umschlossen im Lot eingebettet und können bei Zugeinwirkung axial nicht mehr gleiten.

Nach dem Anritzen und Trennen der Faserenden wird das Lot 16 wieder verflüssigt, der Lotspiegel abgesenkt und der Niederhalter vom Lötbad 15 abgenommen oder zurückgeklappt sowie eventuell noch vorhandene Lotreste von den Glasfasern 23 entfernt. Die Wärmezufuhr des Lötbades wird jetzt unterbrochen, so daß es erkaltet. Die Faserenden können nun geschweißt und der Spleißvorrichtung 1 anschließend entnommen werden. Natürlich ist es auch möglich, die Faserenden nach dem Anritzen und Trennen erst miteinander zu verschweißen und die Befestigung der Glasfasern 23 erst danach durch Erwärmen des Lötbades 15 zu lösen.

**Patentansprüche**

1. Verfahren zur lösbaren Befestigung von Glasfasern in einer Spleißvorrichtung (1), in der sie in Aufnahmen von Faserhalteplatten (6, 10) vorfixiert und in weiteren Aufnahmen der Spleißvorrichtung (1) mit vom Primärcoating befreiten, blanken Glasfasern (23) befestigt, danach geritzt, durch axiale Zugeinwirkung voneinander getrennt, die Faserenden anschließend geschweißt und die Glasfasern nach dem Lösen der Befestigung der Spleißvorrichtung (1) entnommen werden, **dadurch gekennzeichnet,** daß die blanken Glasfasern (23) zum Befestigen in ein in die Spleißvorrichtung (1) integriertes Lötbad (15) eingelötet und zum Lösen der Befestigung das Lot (16) verflüssigt und die blanken Glasfasern (23) dem Lötbad (15) entnommen werden.

2. Verfahren nach Anspruch 1, gekennzeichnet durch die Anwendung folgender Verfahrensschritte:

a) Einlegen der aus der Faserhalteplatte (6, 10) hervorstehenden Glasfasern (23) in eine Führungsleiste (14) der Spleißvorrichtung (1) durch Einsetzen der Faserhalteplatte (6, 10) in eine Aufnahme (5, 9), bis die Glasfasern (23) plan auf dem Rand des Lötbades (15) der Spleißvorrichtung (1) zu liegen kommen,

b) Erwärmen des Lotes (16) bis zu dessen Verflüssigung,

c) Auflegen eines Niederhalters quer über die Glasfasern (23) in der Mitte des Lötbades (15),

d) Anheben des Lotspiegels bis über die Glasfasern (23),

e) Abkühlen des Lotes (16) bis zum Erstarren,

f) nach dem Trennen oder Verschweißen Wiederverflüssigen des Lotes (16) und Absenken des Lotspiegels sowie Entfernen des Niederhalters und Entnehmen der Glasfasern (23).

3. Vorrichtung zur lösbaren Befestigung von Glasfasern in einer Spleißvorrichtung (1), die Faserhalteplatten (6, 10) mit Aufnahmen hat, in denen die Glasfasern vorfixierbar sind und die weitere Mittel zur Befestigung der vom Primärcoating befreiten, blanken Glasfasern (23) aufweist,
**dadurch gekennzeichnet,** daß die Vorrichtung zur Befestigung der blanken Glasfasern (23) aus einer an jedem die Faserhalteplatten (6, 10) aufnehmenden Vorderende (12) der Spleißvorrichtung (1) angeordneten, mit Schlitzen (14') versehenen Führungsleiste (14) zur Abstandshalterung der Glasfasern (23) und einem Lötbad (15) besteht, in das die Glasfasern (23) einlötbar und auslötbar sind.

4. Vorrichtung nach Anspruch 3, dadurch gekennzeichnet, daß das Lötbad (15) aus einem blockförmigen Körper mit einer ein Lot (16) enthaltenden Mulde besteht, deren Rand mit einem Nutenfeld (13) der Aufnahme (5, 9) in einer Ebene liegt.

5. Vorrichtung nach Anspruch 3 und 4, dadurch gekennzeichnet, daß die Anhebung und Absenkung des flüssigen Lotspiegels mittels eines in die Mulde des Lötbades (15) einführ- und herausziehbaren Schiebers (11) erfolgt.

6. Vorrichtung nach Anspruch 3 bis 5, dadurch gekennzeichnet, daß der blockförmige Körper des Lötbades (15) an einem Ende einen Zapfen (18) zum Aufstecken eines Lötkolbens aufweist.

7. Vorrichtung nach Anspruch 3 bis 6, dadurch gekennzeichnet, daß der blockförmige Körper des Lötbades (15) aus Kupfer besteht.

8. Vorrichtung nach Anspruch 3 bis 5 und 7, dadurch gekennzeichnet, daß in oder unter dem blockförmigen Körper des Lötbades (15) ein Heizelement angeordnet ist.

9. Vorrichtung nach Anspruch 3 bis 5, dadurch gekennzeichnet, daß der blockförmige Körper des Lötbades (15) aus einem Isolator besteht und daß das Lot (16) durch direkten Stromdurchgang erwärmbar ist.

10. Vorrichtung nach Anspruch 3 bis 9, dadurch gekennzeichnet, daß der blockförmige Körper des Lötbades (15) gegenüber der Spleißvorrichtungs-Aufnahme (5, 9) thermisch isoliert ist.

11. Vorrichtung nach Anspruch 10, dadurch gekennzeichnet, daß die thermische Isolierung des Lötbades (15) aus Glasplättchen besteht.

## Claims

1. A method for releasably fixing glass fibers in a splicing device (1) in which they are pre-fixed in receiving portions of fiber holding plates (6, 10), then fixed in further receiving portions of the splicing device (1) with bare glass fibers (23) freed from the primary coating, then scored, separated by applying axial tension, subsequently fused together at their ends, and, after the fixing has been released, removed from the splicing device (1),
**characterized in** that, to fix the bare glass fibers (23), the latter are soldered into a solder bath (15) integral with the splicing device (1), and that, to release the fixing, the solder (16) is liquefied and the bare glass fibers (23) are removed from the solder bath (15).

2. A method as claimed in claim 1, characterized by the following steps:
a) placing the glass fibers (23) projecting from the fiber holding plate (6, 10) into a guide bar (14) of the splicing device (1) by inserting the fiber holding plate (6, 10) into the receiving portion (5, 9) until the glass fibers (23) lie flat on the edge of the solder bath (15) of the splicing device (1);
b) heating the solder (16) until it liquefies;
c) placing a holding-down device across the glass fibers (23) at the center of the solder bath (15),
d) raising the level of the molten solder above the glass fibers (23);

e) cooling the solder (16) until it solidifies,

f) after the glass fibers have been separated or welded together, liquefying the solder (16) again, lowering the level of the molten solder, removing the holding-down device, and taking the glass fibers (23) out.

3. A device for releasably fixing glass fibers in a splicing device (1) having fiber holding plates (6, 10) with receiving portions in which the glass fibers are pre-fixable, and having further means for fixing the bare glass fibers (23) freed from the primary coating, **characterized in** that the device for fixing the bare glass fibers (23) consists of a guide bar (14) located at each of the ends (12) of the splicing device which receive the fiber holding plates (6, 10), said guide bar (14) having slots (14') for holding the glass fibers (23) in a spaced relationship from each other, and a solder bath (15) into which the glass fibers (23) can be soldered or from which they can be unsoldered.

4. A device as claimed in claim 3, characterized in that the solder bath (15) is a block-shaped body with a trough containing a solder (16), the edge of the trough being level with a groove array (13) in the receiving portion (5, 9).

5. A device as claimed in claims 3 and 4, characterized in that the level of the molten solder is raised and lowered by means of a slide (17) which can be inserted into and withdrawn from the trough of the solder bath (15).

6. A device as claimed in claims 3 to 5, characterized in that the block-shaped body of the solder bath (15) has a projection (18) at one end for attaching a soldering iron.

7. A device as claimed in claims 3 to 6, characterized in that the block-shaped body of the solder bath (15) is made of copper.

8. A device as claimed in claims 3 to 5 and 7, characterized in that a heating element is located in or below the block-shaped body of the solder bath (15).

9. A device as claimed in claims 3 to 5, characterized in that the block-shaped body of the solder bath (15) is an insulator and that the solder (16) is heatable by direct passage of current.

10. A device as claimed in claims 3 to 9, characterized in that the block-shaped body of the solder bath (15) is thermally insulated from the receiving portion (5, 9) of the splicing device.

11. A device as claimed in claim 10, characterized in that the thermal insulation of the solder bath (15) consists of small glass plates.

**Revendications**

1. Procédé de fixation amovible de fibres de verre dans un dispositif à épisser (1), dans lequel les fibres sont fixées préalablement dans des logements d'une plaque de maintien des fibres (6, 10) et sont fixées, au moyen de fibres de verre nues (23) libérées de leur revêtement extérieur, en d'autres logements du dispositif à épisser (1), puis entaillées, séparées l'une de l'autre par l'application d'une traction axiale, les extrémités des fibres sont ensuite soudées et les fibres de verre sont enlevées, après relâchement de la fixation du dispositif à épisser (1), caractérisé en ce que pour assurer la fixation des fibres de verre nues (23), ces dernières sont soudées dans un bain de soudure (15) intégré dans le dispositif à épisser (1) et en ce que, pour libérer la fixation, la soudure (16) est remise sous forme liquide et les fibres de verre nues (23) sont enlevées du bain de soudure (15).

2. Procédé selon la revendication 1, caractérisé par la mise en oeuvre des étapes suivantes consistant à:

a) mettre en place les fibres de verre (23) qui s'étendent au-delà des plaques de maintien des fibres (6, 10) dans une barre de guidage (14) du dispositif à épisser (1) par insertion des plaques de maintien des fibres (6, 10) dans un logement (5, 9) jusqu'à ce que les fibres de verre (23) viennent s'appliquer de façon plane au bord du bain de soudure (15) du dispositif à épisser (1);

b) chauffer la soudure (16) jusqu'à sa liquéfaction ;

c) mettre en place un support inférieur transversalement sur les fibres de verre (23) au milieu du bain de soudure (15);

d) élever le niveau de la surface de la soudure juste au-dessus des fibres de verre (23);

e) refroidir la soudure (16) jusqu'à solidification;

f) après la séparation ou le soudage, remettre sous forme liquide la soudure (16) et abaisser le niveau de la surface de la soudure, puis éloigner le support inférieur et enlever les fibres de verre (23).

3. Dispositif pour la fixation amovible de fibres de verre dans un dispositif à épisser (1), muni de plaques de maintien des fibres (6, 10) pourvues de logements dans lesquels les fibres de verre sont préalablement fixées et qui comportent des moyens supplémentaires pour la fixation des fibres de verre nues (23) libérées de leur revêtement primaire, caractérisé en ce que le dispositif pour la fixation des fibres de verre nues (23) se compose d'une barre de guidage (14) munie de fentes (14') disposées à chacune des extrémités avant (12) du dispositif à épisser (1) et destinée à recevoir les plaques de maintien des fibres (6, 10), pour maintenir l'écart entre les fibres de verre (23) et d'un bain de soudure (15) dans lequel les fibres de verre (23) peuvent être maintenues par soudage et libérées par désoudage.

4. Dispositif selon la revendication 3, caractérisé en ce que le bain de soudure (15) est composé d'un corps en forme de bloc muni d'une cavité contenant de la soudure faible (à l'étain) (16), et dont le bord est disposé dans un champ de rainures (13) du logement (5, 9).

5. Dispositif selon la revendication 3 et 4, caractérisé en ce que l'élévation et l'abaissement du niveau de surface de la soudure liquide est réalisé au moyen d'un coulisseau (11) susceptible d'être introduit dans, et retiré de, la cavité du bain de soudure (15).

6. Dispositif selon la revendication 3 à 5, caractérisé en ce que le corps en forme de bloc du bain de soudure (15) comporte à l'une de ses extrémités une broche (18) pour l'enfichage d'un fer à souder.

7. Dispositif selon la revendication 3 à 6, caractérisé en ce que le corps en forme de bloc du bain de soudure (15) est réalisé en cuivre.

8. Dispositif selon la revendication 3 à 5 et 7, caractérisé en ce qu'un élément de chauffage est disposé dans ou sous le corps en forme de bloc du bain de soudure (15).

9. Dispositif selon la revendication 3 à 5, caractérisé en ce que le corps en forme de bloc du bain de soudure (15) est composé d'un dispositif isolant et en ce que la soudure (16) est susceptible d'être chauffée par passage direct d'un courant.

10. Dispositif selon la revendication 3 à 9, caractérisé en ce que le corps en forme de bloc du bain de soudure (15) est isolé thermiquement par rapport aux logements (5, 9) du dispositif à épisser.

11. Dispositif selon la revendication 10, caractérisé en ce que l'isolation thermique du bain de soudure (15) est constitué de plaquettes de verre.

**Fig. 1**

**Fig. 2**